Europäisches Patentamt

European Patent Office

Office européen des brevets

(11) Numéro de publication: **0 222 635**
**A1**

## (12) DEMANDE DE BREVET EUROPEEN

(21) Numéro de dépôt: 86402173.8

(22) Date de dépôt: 02.10.86

(51) Int. Cl.4: **G 01 N 21/88**
G 01 M 3/00, G 02 B 23/26,
G 21 C 17/00

(30) Priorité: 07.10.85 FR 8514819

(43) Date de publication de la demande:
20.05.87 Bulletin 87/21

(84) Etats contractants désignés:
BE CH DE FR GB IT LI NL SE

(71) Demandeur: **COMMISSARIAT A L'ENERGIE ATOMIQUE
31/33, rue de la Fédération
F-75015 Paris (FR)**

(72) Inventeur: **Barriere, Alain
19 Bis, rue de Viry
F-91390 Morsang sur Orge (FR)**

(74) Mandataire: **Mongrédien, André et al
c/o BREVATOME 25, rue de Ponthieu
F-75008 Paris (FR)**

(54) Dispositif d'examen à distance de défauts débouchant à la surface interne d'une cavité profonde.

(57) Une sonde d'observation (12) apte à se déplacer dans la cavité comporte un miroir (34) incliné par rapport à la surface à observer pour diriger le rayonnement d'une source mono-chromatique (6) transmis par la fibre optique (8) vers la paroi et pour réfléchir le rayonnement de photoluminescence vers une fibre optique de retour qui le conduit vers des moyens de traitement (14, 16) . Un raccord optique tournant (21) placé sur la fibre optique permet la continuité de la ligne optique et la progression de la sonde sans vrillage de ladite fibre optique.

Ce dispositif permet de détecter les défauts de tubes d'échangeur de chaleur par exemple.

FIG. 1

## Description

Dispositif d'examen à distance de défauts débouchant à la surface interne d'une cavité profonde

La présente invention concerne un dispositif d'examen à distance des défauts débouchant à la surface interne d'une cavité profonde.

Plus précisément, ce dispositif utilise la photoluminescence d'une substance appelée "pénétrant" se fixant sélectivement dans ou sur les défauts de surface de la cavité profonde.

Parmi les méthodes les plus utilisées à l'heure actuelle pour rechercher des défauts de surface sur des pièces mécaniques, et particulièrement sur les tubes, on peut citer la gammagraphie, la neutronographie, les ultrasons, les courants de Foucault et le ressuage.

Cette dernière méthode est très employée pour la recherche des défauts débouchant en surface dont la faible dimension ne permet pas l'observation à l'oeil nu.

Le principe du ressuage est le suivant : la zone à observer est imprégnée d'un liquide doué d'un grand pouvoir pénétrant et contenant des traceurs devenant fluorescents lorsqu'ils sont excités par une lumière ultraviolette.

Les défauts débouchant en surface, quelle que soit leur taille, se remplissent de ce liquide et forment des micro-réservoirs. Ce liquide, que l'on appelle "pénétrant", est ensuite éliminé de la surface par un rinçage par exemple à l'eau.

Certains de ces liquides, dits "auto-ressuants", grâce à des phénomènes de tension interfaciale et d'adsorption, réapparaissent en surface après un certain temps, visualisant ainsi les micro-défauts à l'intérieur desquels ils s'étaient infiltrés par l'émission d'une lumière intense et brillante lorsqu'ils sont éclairés par une lumière ultraviolette.

Les premiers appareils utilisant le rayonnement ultraviolet pour la recherche de défauts comportaient des lampes à vapeurs de mercure (lampes de Wood) dont les dimensions étaient trop importantes pour qu'on puisse les introduire dans de petites cavités, telles que des tubes de faible diamètre. On a tenté d'utiliser des lampes miniaturisées incorporées à l'extrémité des endoscopes. Mais ces appareils présentent deux inconvénients importants : une puissance d'éclairage faible et un dégagement de chaleur important.

On a également essayé d'utiliser des guides de lumière, soit des fibres de verre, soit des liquides. Mais pour des longueurs d'onde comprises entre 380 et 400 nanomètres, ces différents guides ne permettent pas de dépasser un flux lumineux de 2000 microwatts par centimètre carré, et ce à une distance de quelques mètres, ce qui limite l'utilisation de ce procédé d'illumination.

La présente invention a pour objet un dispositif qui permet, en envoyant un rayonnement monochromatique de forte puissance dans une fibre d'excellente capacité de conduction optique, et focalisé sur la surface interne d'une cavité à examiner d'obtenir une photoluminescence particulièrement intense qui permet de détecter un défaut. Une sonde d'observation permet de réaliser la focalisation du rayonnement monochromatique et un contrôle systématique de la paroi interne de la cavité. Un raccord optique participe à la continuité de la ligne optique et évite le vrillage de la fibre optique lors de la progression dans la cavité de la sonde d'observation. Ce dispositif comporte :
- une source de rayonnement monochromatique pour émettre un rayonnement monochromatique ;
- une fibre optique, reliée à la source de rayonnement à une extrémité et à une autre extrémité, à une sonde d'observation, pour transmettre le rayonnement monochromatique de la source jusqu'à ladite sonde d'observation ;
- ladite sonde d'observation comportant un miroir incliné par rapport à la surface à observer pour diriger le rayonnement transmis par la fibre optique vers la paroi à examiner et pour réfléchir un rayonnement de retour vers une fibre optique de retour pour transmettre le rayonnement de retour de la surface observée vers des moyens de traitement pour traiter le rayonnement de retour.
- un raccord optique tournant placé sur la fibre pour permettre la progression de la sonde, sans vrillage de la fibre optique.

Grâce à ce dispositif, on excite la photoluminescence d'un liquide pénétrant de ressuage à l'aide de la source de rayonnement monochromatique, cette source de rayonnement pouvant être constituée par un laser pulsé émettant un rayonnement ultraviolet. La fibre optique guide le rayonnement ultraviolet jusqu'à l'endroit examiner. De préférence la fibre optique est également utilisée pour assurer le retour du signal optique vers des moyens d'observation, mais on peut aussi utiliser deux fibres distinctes.

De préférence, ledit miroir incliné est monté tournant par rapport à la sonde d'observation, cette dernière comportant des moyens d'entraînement en rotation de ce miroir.

Selon une réalisation, la sonde d'observation est constituée d'un corps qui comporte un raccord pour relier la fibre optique au corps, un tube transparent, ledit miroir tournant étant monté tournant à l'intérieur de ce tube transparent, des moyens optiques pour focaliser le rayonnement issu de la fibre optique sur la surface à observer, et des moyens de guidage du corps par rapport à la cavité.

Selon une autre réalisation, la sonde d'observation est composée de deux sous-ensembles, à savoir un sous ensemble d'entraînement et un sous-ensemble d'observation, chaque sous-ensemble comportant un corps et des moyens de guidage pour guider le corps dans la cavité, le sous-ensemble d'entraînement comportant un moteur, le sous-ensemble d'observation comportant le miroir tournant, un flexible d'entraînement reliant le moteur au miroir tournant.

Par ailleurs l'invention concerne un raccord tournant intercalé sur la fibre optique pour permettre une rotation sans vrillage de cette fibre, ce raccord comportant un boîtier cylindrique, une bague montée coulissante dans le boîtier, une première embase montée fixe sur le boîtier, une seconde embase montée tournante sur la bague coulissante, chaque embase comportant un alésage cylindrique terminé par une partie conique, une sphère étant intercalée entre les parties coniques des deux embases, une butée à bille étant intercalée entre le boîtier et la bague coulissante.

L'invention apparaîtra mieux à la lecture de la description qui suit, donnée à titre illustratif, d'un exemple de réalisation en référence aux dessins annexés sur lesquels :

    - la figure 1 représente une vue schématique d'un dispositif d'endoscopie conforme à l'invention ;

    - la figure 2 représente un premier mode de réalisation d'une sonde d'observation faisant partie d'un dispositif d'endoscopie conforme à l'invention ;

    - la figure 3 représente une variante de réalisation de la sonde d'observation de la figure 2 ;

    - la figure 4 représente un deuxième mode de réalisation d'une sonde d'observation faisant partie d'un dispositif d'endoscopie conforme à l'invention ;

    - la figure 5 est une vue à échelle agrandie par rapport à la figure 4 qui représente un sous-ensemble d'observation faisant partie de la sonde d'endoscopie représentée sur la figure 4 ;

    - la figure 5a est une vue en perspective de l'extrémité du fourreau du sous-ensemble de la figure 5 ;

    - la figure 6 est un schéma illustratif qui montre un moyen préféré pour déplacer en translation le miroir par rapport à la surface à observer ;

    - la figure 7 représente un raccord optique tournant pour une fibre optique faisant partie d'un dispositif d'endoscopie conforme à l'invention.

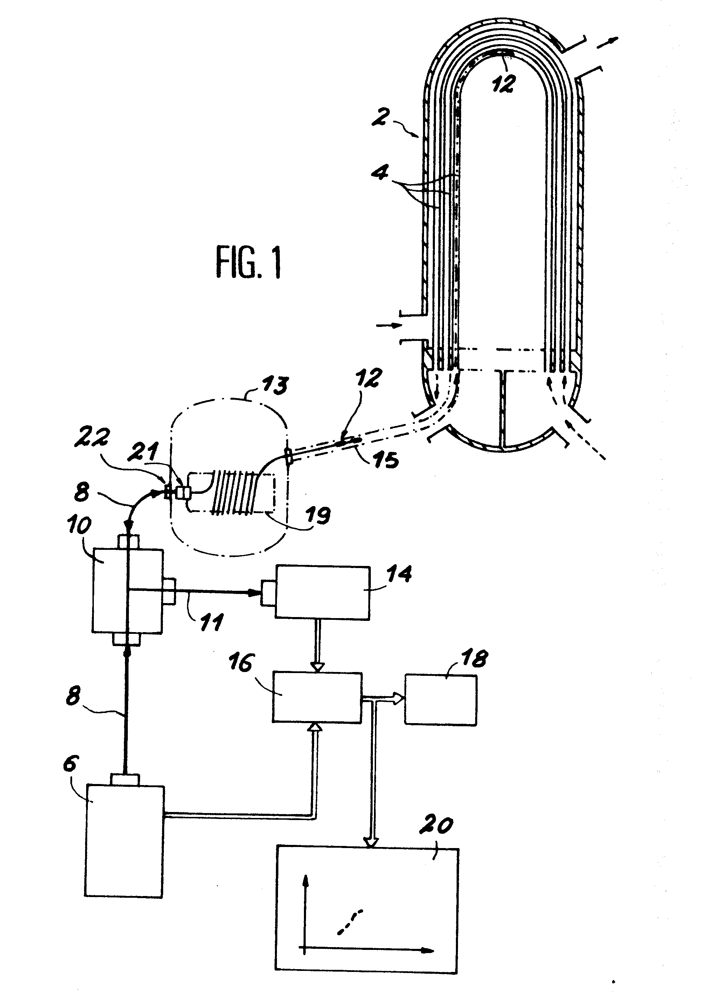

On a représenté sur la figure 1 une vue d'ensemble schématique d'un dispositif d'endoscopie conforme à l'invention. Ce dispositif peut être utilisé par exemple pour inspecter les tubes en U d'un générateur de vapeur désigné par la référence 2. Les tubes 4 de ce générateur, dont trois seulement ont été représentés afin de ne pas surcharger la figure, présentent une grande longueur qui peut dépasser une centaine de mètres et un faible diamètre intérieur, de l'ordre de 20 mm. Il est donc particulièrement difficile d'inspecter la paroi interne de ces tubes afin d'y détecter d'éventuelles fissures.

Cependant, la détection et la localisation des défauts constituent des opérations de contrôle essentielles des appareils d'échange de chaleur, en particulier lorsque les fluides d'échange risquent de réagir l'un sur l'autre.

Le dispositif de l'invention répond à ce besoin. Il comporte tout d'abord une source de rayonnement monochromatique 6. Dans l'exemple représenté, cette source est constituée par un laser pulsé à azote émettant une lumière ultraviolette de longueur d'onde égale à 337,1 nanomètres par impulsion de 8 nanosecondes à un taux de répétition de 50 cycles par seconde. D'autres types de laser, pulsés ou non, peuvent être employés comme source de rayonnement monochromatique, tels que des lasers eximères, les lasers à colorants munis de doubleurs de fréquence, les lasers accordables ou non. Il faut bien entendu choisir pour chacun d'eux un liquide de ressuage convenable.

Une lentille, non représentée, incorporée au laser 6 permet de focaliser le rayonnement émis par le laser sur une extrémité d'une fibre optique 8 qui présente une excellente capacité de conduction au rayonnement ultraviolet et permet d'éclairer le liquide de ressuage avec une forte intensité lumineuse, et donc d'obtenir une fluorescence très brillante dont la lumière peut être conduite en retour avec une faible atténuation. Elle est gainée d'un matériau présentant un indice de réfraction tel que la lumière ne puisse diffuser au travers.

La fibre 8 est reliée à son autre extrémité à un multiplexeur-démultiplexeur 10 dont le rôle, comme on l'expliquera plus en détail ultérieurement, est de séparer la lumière de retour, qui est une lumière visible de la lumière ultraviolette émise par le laser.

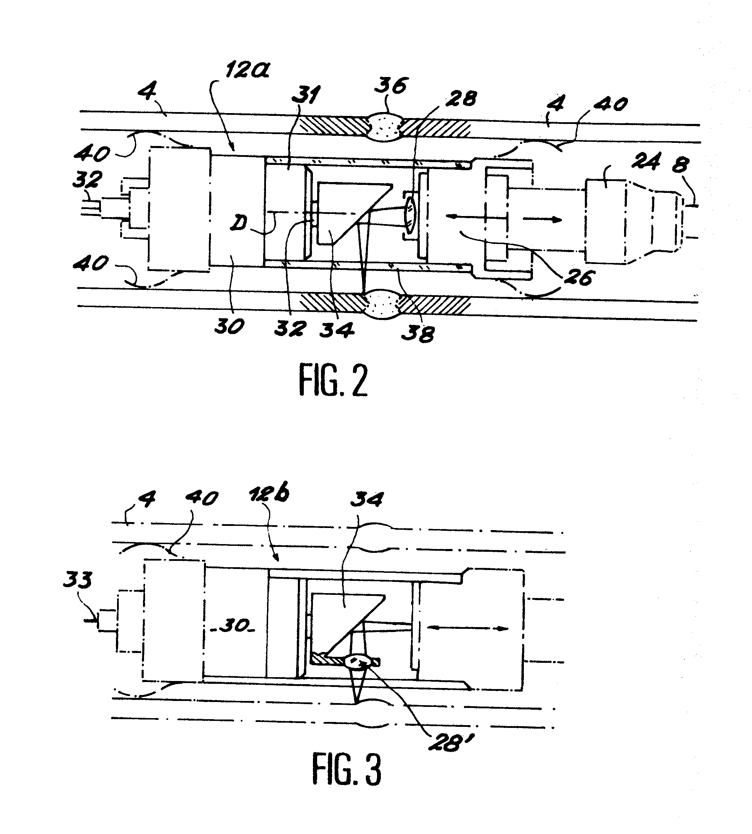

A la sortie du multiplexeur, la fibre 8 est raccordée à une sonde d'observation désignée par la référence 12 et qui sera décrite plus en détail en référence aux figures 2 à 6.

La lumière émise par le laser 6 est acheminée par la fibre optique 8 jusqu'à la sonde d'observation 12 qui comporte un miroir incliné à 45° qui dirige ce rayonnement sur la surface à observer. La fluorescence du pénétrant provoquée par cet éclairement est réfléchie vers l'extrémité de la fibre optique 8 par ce même miroir et est acheminée en retour jusqu'au multiplexeur-démultiplexeur 10. A la sortie du multiplexeur, la lumière visible est dirigée par une fibre optique 11 (qui peut être en verre, selon un mode de réalisation) sur un photomultiplicateur 14 qui transforme le signal optique reçu en un signal électrique. Le photomultiplicateur 14 est relié à un dispositif de synchronisation 16 permettant de recueillir le signal de retour issu du photomultiplicateur en synchro-nisme avec les impulsions du laser 6. Le signal électrique est ensuite dirigé vers une centrale de traitement 18 ou un enregistreur 20.

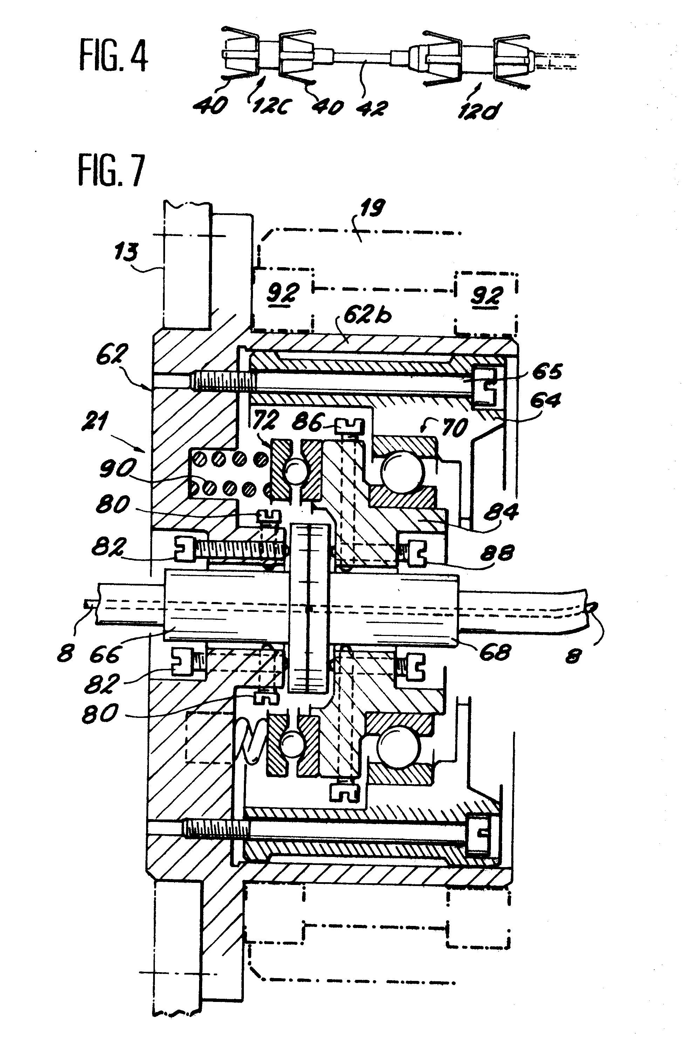

En outre, l'invention comporte des moyens pour propulser, par exemple pneumatiquement, la sonde d'observation dans un tube 4 à observer. Ces moyens sont de tout type convenable connu dans l'état de la technique. En particulier, ils peuvent être exécutés conformément à la demande de brevet français n° 83 00692 du 18 janvier 1983. Ils comprennent alors une enceinte étanche 13 apte à être mise en communication avec un tube 4 à contrôler au moyen d'un conduit 15 ; des moyens tels qu'un compresseur, non représenté, pour fournir un fluide sous pression envoyé à l'intérieur de l'enceinte et des moyens tels qu'une soupape de décharge (non représentée) pour évacuer ce fluide hors de l'enceinte. Des moyens d'enroulement du câble constitués par un tambour 19 sont prévus. La longueur utile de la fibre optique enroulée sur le tambour est entourée par une gaine résistant à la traction et munie de flotteurs c'est-à-dire d'olives faisant saillie par rapport à la gaine. Un raccord optique tournant 21 intercalé entre la fibre optique fixe et la fibre optique tournante qui sera décrit en référence à la figure 7, permet le déroulement sans vrillage du câble.La fibre optique fixe pénètre à l'intérieur de l'enceinte étanche au travers d'un passage étanche 22.

Sur la figure 2 est montré un premier mode de réalisation d'une sonde d'observation faisant partie d'un dispositif d'endoscopie conforme à l'invention. La tête d'observation 12a est raccordée à l'extrémité de la fibre optique 8 par un connecteur 22 solidaire de la fibre. Elle comporte une embase 24 et un support d'embase 26 qui reçoit une lentille convergente en silice 28. La tête d'observation comporte encore un moteur électrique 30 relié par un axe 32 à un miroir tournant 34 incliné à 45° par rapport à l'axe longitudinal désigné par la lettre "D" de la sonde d'observation 12a. Dans l'exemple représenté, le faisceau du laser est localisé sur un bord d'une soudure 36 qui relie deux parties d'un tube 4. Le moteur électrique 30 peut être alimenté par tout moyen convenable. Il peut être alimenté notamment au moyen d'un câble d'alimentation électrique 33. On peut également prévoir des batteries électriques intégrées au corps de la sonde.

Le moteur 30 est un minimoteur solidaire d'un réducteur 31 de vitesse de même diamètre qui forment un ensemble d'environ 36 mm de long. Cet ensemble est relié au support d'embase 26 par un tube de silice de haute pureté 38 collé à l'araldite à chacune de ses deux extrémités. Un fil, non représenté, imprégné d'un produit fluorescent est fixé à l'extérieur du tube de silice longitudinalement selon une génératrice du tube 38. Ce fil permet d'obtenir une impulsion lumineuse matérialisant l'enregistrement chaque tour du miroir tournant 34. Des patins 40 positionnent la sonde par rapport à l'axe du tube de manière que l'axe de ce dernier soit sensiblement confondu avec l'axe longitudinal D de la sonde.

On a représenté sur la figure 3 une variante de réalisation 12b de la sonde de la figure 2 qui diffère seulement par le fait que la position de la lentille de silice 28' est différente. Au lieu d'être située dans l'axe de la fibre optique, c'est-à-dire sur l'axe longitudinale D de la sonde, cette lentille de focalisation est disposée de manière que son axe soit perpendiculaire à celui de la paroi interne du tube 4.

Les sondes 12a et 12b décrites aux référence aux figures 2 et 3 sont déplacées axialement par le dispositif pneumatique mentionné précédemment. L'observation s'effectue pendant l'avance, le système optique c'est-à-dire le miroir 34 étant en rotation permanente. Avec un tel dispositif d'entraînement pneumatique de la sonde, la vitesse de défilement de cette dernière n'est ni parfaitement régulière ni parfaitement connue. La vitesse de défilement de la sonde et la vitesse de rotation du miroir tournant 34 ne peuvent donc pas être synchronisées. L'intégralité de l'observation de la surface interne du tube 4 ne peut donc être assurée qu'en multipliant le nombre de passages de la sonde 12a.

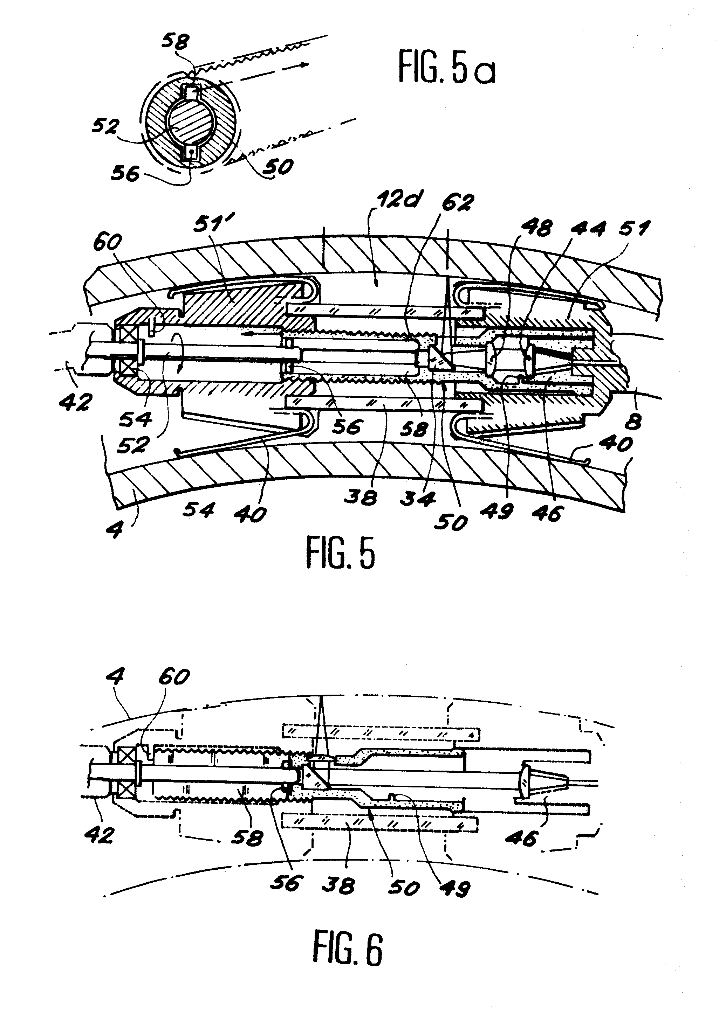

C'est pourquoi, selon un second mode de réalisation représenté sur les figures 4 à 6, la sonde d'observation comporte des moyens qui permettent de déplacer le miroir d'observation de manière synchrone avec sa rotation.

Sur la figure 4, on peut voir que la sonde est constituée de deux sous-ensembles, à savoir un sous-ensemble d'entraînement 12c et un sous-ensemble d'observation 12d. Chaque sous-ensemble comporte un corps, et des moyens de guidage 40 pour guider le corps dans la cavité, constituée ici par les parois internes du tube 4. Un flexible d'entraînement 42 relie les deux sous-ensembles. Il est relié à l'une de ses extrémités à un moteur d'entraînement électrique, qui peut être de type analogue à celui qui est utilisé pour le premier mode de réalisation et à son autre extrémité, le flexible est relié à l'axe du miroir tournant 34. Ce flexible permet la circulation de la sonde d'observation à l'intérieur de tubes très cintrés présentant un rayon de courbure voisin de 125 mm pour un diamètre interne de 20 mm.

On a représenté plus en détail sur les figures 5 et 5a le sous-ensemble d'observation 12d du mode de réalisation de l'invention représenté sur la figure 4. La fibre 8 est raccordée par un connecteur, non re présenté, au sous-ensemble de détection 12d. Le faisceau lumineux qui sort de la fibre 8 est dirigé sur une lentille de silice 44 montée à l'intérieur d'une bague 46 solidaire du corps de manière à ce que le faisceau sorte parallèle. Une autre lentille en silice focalise sur la surface à examiner le faisceau lumineux dévié par le miroir tournant 34. Cette lentille 48 est montée à l'intérieur d'un fourreau 50 mobile en translation à l'intérieur du corps 51 du sous-ensemble d'observation 12d. La translation du fourreau 50 est obtenue par l'intermédiaire d'un système vis-écrou qui transforme le mouvement de rotation du moteur du sous-ensemble d'entraînement (non représenté) transmis par le flexible 42 à l'axe d'entraînement 52 monté sur un palier à billes 54 logé dans le corps, en un mouvement de translation. Le fourreau 50 est muni d'un filetage extérieur qui coopère avec un filetage intérieur formé dans l'élément 51' du corps. L'axe d'entraînement 52 est muni son extrémité d'une goupille transversale 56, comme on peut le voir plus en détail sur la figure 5a qui représente une vue en perspective de l'extrémité du fourreau 50. Ce fourreau présente une fente longitudinale 58 dans laquelle la goupille 56 peut coulisser.

D'autre part, une butée fixe 60 est prévue dans l'élément de corps 51'. Le fourreau 50 peut ainsi se déplacer entre cette butée fixe 60. Une autre butée 41 est prévue sur une paroi interne du fourreau 50.

Sur la figure 6, on a représenté le fourreau 50 à l'extrémité de sa course opposée à celle représentée sur la figure 5 avec la lentille 48' placée dans ce cas après le miroir comme représenté sur la figure 3.

En effet, sur la figure 5, la butée 49 prévue à l'intérieur du fourreau 50 est pratiquement en butée avec la bague fixe 46.

Au contraire, sur la figure 6, le fourreau est en butée contre la butée 60 qui limite la course à l'autre extrémité.

Lorsque le fourreau 50 parvient en butée contre l'une ou l'autre des butées 60 et 49, la résistance à l'avancement du fourreau ainsi provoquée détermine une augmentation brutale de la consommation électrique du moteur du sous-ensemble d'entraînement. Un dispositif électronique approprié détecte cette augmentation de consommation et inverse la polarité du courant d'alimentation du moteur, ce qui inverse le sens de rotation de ce moteur et, par suite, le sens de déplacement du fourreau. Le miroir 34 peut ainsi effectuer une succession d'allers et retours à l'intérieur du tube de silice 38.

Grâce à ce système d'entraînement, on obtient un déplacement sychrone longitudinal du miroir tournant avec l'angle de rotation de ce miroir. Pendant le déplacement du miroir, la tête d'observation est fixe. En d'autres termes, cela signifie que l'on interrompt la pression du dispositif pneumatique d'entraînement de la sonde d'observation. Ce mode de réalisation présente l'avantage de permettre d'observer avec un pas constant et bien connu une longueur déterminée du tube sans avoir à répéter un grand nombre de fois l'étape d'observation.

On a représenté sur la figure 7 une vue en coupe d'un raccord optique tournant qui permet de raccorder un tronçon de fibre optique fixe aga un autre tronçon de fibre optique tournant. En effet, comme on peut le voir sur la figure 1, la fibre optique qui pénètre dans les tubes du générateur de vapeur 2 est déroulée à partir d'un tambour tournant 19, tandis que le tronçon de fibre optique qui est raccordé au multiplexeur démultiplexeur 10 est fixe en rotation. Il est donc nécessaire de prévoir un raccord tournant entre ces deux tronçons de fibre optique. Le raccord 21 représenté sur la figure 7 permet précisément de résoudre ce problème. Ce raccord tournant est placé de préférence sur le tambour 19 sur lequel s'enroule la fibre optique, mais il peut être placé à tout endroit convenable de façon à éviter la torsion et le vrillage de la fibre et de sa gaine pendant l'avance de la sonde d'observation.

Ce raccord comporte un boîtier cylindrique 62 qui se compose d'un flasque 62a et d'une partie cylindrique externe 62b comportant un alésage intérieur. Une bague 64 est reçue dans cet alésage intérieur. Elle peut y coulisser selon la direction longitudinale du boîtier. La position longitudinale de la bague 64 est réglée au moyen d'une pluralité de vis 65. Une embase fixe 66, située la partie gauche de la figure 7, traverse le flasque 62a du boîtier cylindrique 62. Elle est constituée d'une partie cylindrique et d'une collerette. Elle comporte un alésage longitudinal interne dans lequel est reçue la partie non tournante de la fibre optique 8 reliée au multiplexeur-démultiplexeur 10. A son extrémité introduite dans l'embase 66, la fibre est munie d'une fiche de type classique permettant un centrage convenable à l'intérieur de l'embase. La position de l'embase 66 peut être ajustée axialement au moyen de vis 80 et longitudinalement au moyen de vis 82.

Une seconde embase, portant la référence 68, est montée tournante à l'intérieur de la bague 64 par l'intermédiaire d'un roulement 70. De la même manière que l'embase fixe 66, l'embase tournante se compose d'une partie cylindrique et d'une collerette qui permettent le dégauchissage de la position selon une direction radiale et selon une direction longitudinale par rapport à une bague intermédiaire 84 au moyen de vis 86 et 88. Une extrémité du tronçon tournant de la fibre optique 8 est connectée à une fiche, de type clas sique, introduite à l'intérieur d'un alésage de l'embase tournante 68. Grâce au roulement 70, l'embase 68 peut tourner par rapport à la première embase 66. Le jeu axial du roulement 70 est rattrapé à l'aide d'une butée à billes 72. L'une des bagues de cette butée est appliquée contre la bague intermédiaire 84 sur laquelle est montée la bague intérieure du roulement 70, tandis que l'autre bague de la butée à billes 72 subit l'action d'une pluralité de ressorts hélicoïdaux 90 montés dans des logements du boîtier 62 et dont un seul a été représenté sur la figure 7. La bague extérieure du roulement 70 est montée dans un alésage de la bague 64. Avec le montage qui vient d'être décrit, lorsque l'on serre les vis 65, on rapproche la bague 64 susceptible de coulisser à l'intérieur du boîtier du fond de ce boîtier, ce qui comprime davantage les ressorts 90. Cet effort est transmis à travers la butée à billes 72 à la bague 84 puis à la bague interne du roulement 70, ce qui permet d'en rattraper les jeux.

Lors du montage du raccord tournant, la concentricité de l'embase tournante 68 est d'abord ajustée au moyen de mouvements micrométriques sur les vis 86 et 88, l'extrémité libre du tronçon tournant de la fibre optique 8 étant raccordée à une source de lumière, et un microscope étant placé devant l'autre extrémité de cette fibre tournante. L'embase 66 est ensuite centrée à l'aide de mouvements micrométriques 80 et 82 et on recherche la coïncidence des axes du tronçon fixe de la fibre optique (partie droite de la figure) avec le tronçon tournant de cette fibre (partie gauche de la figure) par l'observation d'un flux lumineux maximal transmis. Il va en effet de soi que le flux lumineux transmis est maximum lorsque les axes des fibres sont parfaitement en regard l'un de l'autre. Lorsque ce flux maximal est atteint, on est certain de la concentricité du mouvement de rotation de la fibre tournante par rapport à la fibre fixe.

Le tambour sur lequel la fibre 8 est enroulée peut être monté par exemple comme représenté en traits mixtes, par l'intermédiaire de roulements 92, le boîtier 62 étant solidaire d'un flasque de support fixe.

Le dispositif objet de l'invention présente des avantages particulièrement intéressants puisque l'on peut ainsi détecter des défauts et des fissures de quelques microns qui ne sont pas décelables ni à l'observation directe par un endoscope usuel en lumière visible, ni avec un éclairage ultraviolet tel que celui obtenu avec des lampes de WOOD. Cette méthode optoélectronique permet de détecter des défauts débouchant à de très grandes distances des parties accessibles, en particulier à l'intérieur des tubes de petit diamètre et de grande longueur comme les tubes d'échangeur de chaleur par exemple.

Quant aux applications, elles sont nombreuses et variées et ne se limitent pas à la simple recherche de défauts dans des pièces mécaniques, métalliques ou non, de toutes formes et de toutes dimensions. On peut de plus, grâce à un étalonnage, établir une correspondance entre les défauts observés et l'enregistrement électrique obtenu et constituer une bibliothèque de défauts types.

## Revendications

1. Dispositif d'examen à distance de défauts débouchant à la surface interne d'une cavité profonde utilisant la photoluminescence d'une substance fixée sélectivement dans les défauts de ladite surface, caractérisé en ce qu'il comprend :
- une source de rayonnement monochromatique (6) ;
- une fibre optique (8), reliée à la source (6) de rayonnement à une extrémité et à une autre extrémité, à une sonde d'observation (12), pour transmettre le rayonnement monochromatique de la source (6) jusqu'à ladite sonde d'observation (12) et le rayonnement de photoluminescence de la sonde jusqu'aux moyens de traitement du signal (14, 16) ;
- une sonde d'observation (12) apte à se déplacer dans la cavité comportant un miroir (34) incliné par rapport à la surface à observer et monté tournant par rapport à la sonde d'observation (12), cette dernière comportant des moyens d'entraînement en rotation de ce miroir pour diriger le rayonnement transmis par la fibre optique (8) vers ladite paroi et pour réfléchir un rayonnement de retour vers une fibre optique de retour qui le conduit vers des moyens de traitement (14, 16) ;
- un raccord optique tournant placé sur la fibre optique pour permettre la continuité de la ligne optique et la progression de la sonde sans vrillage de ladite fibre optique.

2. Dispositif selon la revendication 1, caractérisé en ce que la sonde d'observation (12) comporte un corps, un raccord pour raccorder ladite fibre optique (8) audit corps, un tube transparent (38) monté dans le corps, ledit miroir tournant (34) étant monté tournant à l'intérieur de ce tube transparent (38), des moyens optiques (28, 28') pour focaliser le rayonnement issu de la fibre optique (8) sur la surface à observer, et des moyens de guidage (40) du corps par rapport à la cavité.

3. Dispositif selon la revendication 1, caractérisé en ce que la sonde d'observation est composée de deux sous-ensembles, à savoir un sous-ensemble d'entraînement (12c) et un sous-ensemble d'observation (12d), chaque sous-ensemble comportant un corps et des moyens de guidage (40) pour guider ledit corps dans ladite cavité, le sous-ensemble d'entraînement (12c) comportant un moteur, le sous-ensemble d'observation comportant ledit miroir tournant (34), un flexible d'entraînement (42) reliant ledit moteur au miroir tournant.

4. Dispositif selon l'une quelconque des revendications 1 à 3, caractérisé en ce qu'il comporte une vis (50) et un écrou (54) destiné à coopérer avec ladite vis (50), l'un de ces deux éléments étant monté fixe en rotation dans le corps de la sonde (12), l'autre étant relié en rotation au moteur d'entraînement, pour déplacer ce miroir incliné (34) par rapport au corps, des moyens (60, 49) qui déclenchent l'inversion du sens de rotation du moteur à chaque extrémité de la course du miroir (34).

5. Dispositif selon la revendication 4, caractérisé en ce que les moyens qui déclenchent l'inversion du sens de rotation du moteur à chaque extrémité de la course du miroir sont constitués par des butées fixes (60, 49) disposées à chaque extrémité de la course de ce miroir, et par des moyens électroniques qui détectent une augmentation de la consommation du courant électrique d'alimentation du moteur électrique d'entraînement dudit élément entraîné en rotation (50) et qui inversent automatiquement le sens de rotation du moteur.

6. Dispositif selon l'une quelconque des revendications 1 à 5, caractérisé en ce qu'il comporte des patins de guidage (40) constitués par des lames formant ressort.

7. Dispositif selon l'une quelconque des revendications 1 à 6, caractérisé en ce que les moyens pour traiter le signal de retour comprennent des moyens (14) pour convertir le rayonnement de retour réfléchi par la surface à observer en un signal électrique et un dispositif de synchronisation (16) permettant de recueillir le signal de retour en synchronisme avec les impulsions du laser et un enregistreur (18).

8. Dispositif selon l'une quelconque des revendications 1 à 7, caractérisé en ce que les moyens pour convertir le rayonnement de retour réfléchi par la surface à observer en un signal électrique sont constitués par un photomultiplicateur.

9. Dispositif selon l'une quelconque des revendications 1 à 8, caractérisé en ce que la fibre optique qui relie la source (6) à la sonde (12) est utilisée également pour transmettre le rayonnement de retour, des moyens de séparation (10) étant intercalés sur la fibre optique (8) pour séparer le rayonnement de retour du rayonnement émis par la source monochromatique.

10. Dispositif selon l'une quelconque des revendications 1 à 9, caractérisé en ce qu'il comporte un raccord tournant (21) intercalé sur la fibre optique (8) pour permettre la progression de la sonde sans vrillage de cette fibre (8), ce raccord comportant un boîtier cylindrique (62), une bague (64) montée fixe à l'intérieur d'un alésage du boîtier (62), mais dont la position selon une direction longitudinale à l'intérieur de cet alésage peut être ajustée au moyen de vis (65), une première embase (66) montée fixe sur le boîtier (62), et dont la position peut être réglée par rapport à ce boîtier selon une direction longitudinale au moyen de vis (82) et selon une direction axiale au moyen de vis (80), une embase tournante à l'intérieur de la bague (64) par l'intermédiaire d'un roulement 70 et d'une bague intermédiaire (84) sur laquelle est montée la bague intérieure du roulement (70), la position de l'embase (68) pouvant être réglée selon une direction axiale au moyen de vis (88) et selon une direction radiale au moyen de vis (86) montée sur la bague intermédiaire (84), une butée à billes (72) étant intercalée entre le boîtier (62) et la bague intermédiaire (84) par l'intermédiaire de ressorts de compression (90) afin de rattraper le jeu du roulement (70).

11. Dispositif selon l'une quelconque des revendications 1 à 10, caractérisé en ce qu'il comporte des moyens pour propulser la sonde d'observation à l'intérieur de la cavité, ces moyens comprenant une enceinte étanche apte à être mise en communication avec la cavité à contrôler, des moyens pour introduire un fluide sous pression à l'intérieur de la cavité et pour évacuer ce fluide hors de ladite cavité, un câble muni de flotteurs et la sonde de contrôle (12) fixée à l'extrémité du câble, des moyens d'enroulement du câble et des moyens de régulation de la vitesse d'introduction de la sonde.

FIG. 1

FIG. 2

FIG. 3

**FIG. 5a**

**FIG. 5**

**FIG. 6**

FIG. 4

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | MANUFACTURING TECHNOLOGY NOTE, rapport no. WVT-QA-7801, octobre 1979, NTIS, Springfield, US; "Laser scan for bore inspection" * En entier * | 1,2 | G 01 N  21/88<br>G 01 M  3/00<br>G 02 B  23/26<br>G 21 C  17/00 |
| | --- | | |
| Y | EP-A-0 083 759  (SUMITOMO ELECTRIC INDUSTRIES) * Page 17, ligne 6 - page 18, ligne 7; figures 9-11 * | 1,2 | |
| | --- | | |
| Y | GB-A-2 105 048  (KUBOTA LTD) * Page 4, lignes 34-39; page 4, lignes 102-112; figure 3 * | 1,2 | |
| A | | 10 | **DOMAINES TECHNIQUES RECHERCHES (Int. Cl.4)** |
| | --- | | |
| A | US-A-3 409 897  (H. BOSSELAAR et al.) * Colonne 3, lignes 56-70; figure 1 * | 3,11 | G 01 M   3/00<br>G 01 N  21/00<br>G 02 B  23/00<br>G 21 C  17/00 |
| | --- | | |
| A | GB-A-1 207 090  (C. ROHRER) * Page 3, lignes 47-50; page 3, lignes 88-94; figures 3,4 * | 6,11 | |
| | --- | | |
| A | US-A-3 761 186  (T. WASON) * Colonne 3, lignes 25-49; figure 1 * | 7,9 | |
| | ---                    -/- | | |

Le présent rapport de recherche a été établi pour toutes les revendications

| Lieu de la recherche | Date d'achèvement de la recherche | Examinateur |
|---|---|---|
| LA HAYE | 16-12-1986 | POPINEAU G.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| A | REVIEW OF SCIENTIFIC INSTRUMENTS, vol. 51, no. 10, octobre 1980, pages 1403-1406, American Institute of Physics, New York, US; J.H. KINSEY et al.: "Endoscopic system for simultaneous visual examination and electronic detection of fluorescence" <br> * Page 1403, colonne de gauche, lignes 6-20; page 1405, colonne de gauche, lignes 1-3; page 1405, colonne de droite, lignes 30-33, figure 1 * <br><br> ----- | 7,8 | |
| | | | DOMAINES TECHNIQUES RECHERCHES (Int. Cl 4) |

Le présent rapport de recherche a été établi pour toutes les revendications

| Lieu de la recherche | Date d'achèvement de la recherche | Examinateur |
|---|---|---|
| LA HAYE | 16-12-1986 | POPINEAU G.J.P. |